## Europäisches Patentamt

## European Patent Office

## Office européen des brevets

(19)

(11) Veröffentlichungsnummer: **0 097 245**
**B1**

(12) **EUROPÄISCHE PATENTSCHRIFT**

(45) Veröffentlichungstag der Patentschrift:
**17.09.86**

(51) Int. Cl.⁴: **B 27 L 7/00**

(21) Anmeldenummer: **83104858.2**

(22) Anmeldetag: **17.05.83**

(54) **Vorrichtung zur automatischen Bearbeitung von Holzstämmen.**

(30) Priorität: **18.05.82 DE 3218618**
**08.04.83 DE 3312596**

(43) Veröffentlichungstag der Anmeldung:
**04.01.84 Patentblatt 84/1**

(45) Bekanntmachung des Hinweises auf die Patenterteilung:
**17.09.86 Patentblatt 86/38**

(84) Benannte Vertragsstaaten:
**AT CH DE FR GB IT LI SE**

(56) Entgegenhaltungen:
**FR - A - 2 477 056**
**US - A - 3 862 651**
**US - A - 3 974 867**
**US - A - 4 284 112**
**US - A - 4 286 638**
**US - A - 4 294 295**

(73) Patentinhaber: **Kretzer, Walter, Kohlstrasse 13,**
**D-7951 Oberessendorf (DE)**

(72) Erfinder: **Kretzer, Walter, Kohlstrasse 13,**
**D-7951 Oberessendorf (DE)**

(74) Vertreter: **Patentanwälte Dipl.-Ing. E. Eisele Dr.-Ing. H.**
**Otten, Seestrasse 42, D-7980 Ravensburg (DE)**

ACTORUM AG

## Beschreibung

Die Erfindung betrifft eine Vorrichtung zur automatischen Bearbeitung von Holzstämmen, wobei das Holz mittels einer Fördervorrichtung einer Sägeeinrichtung, insbesondere Klappsäge im oberen Bereich eines Maschinentisches und das gesägte Holz einer integrierbaren Spaltvorrichtung zuführbar ist, wobei im unteren Bereich der Vorrichtung bzw. des Maschinentisches ein hydraulischer oder pneumatischer Spaltzylinder mit Stempelplatte und ein der Stempelplatte gegenüberliegender Messerkopf zur Spaltung des Holzes angeordnet ist (US-A 4 294 295).

Die bei Waldarbeiten anfallenden Baumstämme werden heute auf die verschiedensten Arten verarbeitet. Am häufigsten ist die Zerkleinerung der Baumstämme mittels Handbaumsägen. Die in Längen von 1 bis 2 Metern abgesägten Baumstücke werden dann am Waldwegrand aufgestapelt und zur Abholung bereitgehalten. Die weitere Zerkleinerung der Holzstücke erfolgt dann meist manuell durch Sägen, Zerhacken oder dergleichen mit Maschinen wie Kreissägen, Fuchsschwanzsägemaschinen oder ähnlichem. Zum Herstellen von Kleinholz z.B. zur Kaminheizung werden die abgesägten Holzstücke schliesslich noch mit dem Beil zerkleinert. Diese Vorgehensweise ist oft zeitraubend und zum Teil recht mühsam.

Aus der US-A 4 294 295 ist schon eine Vorrichtung zur automatischen Bearbeitung von Holzstämmen bekannt geworden, bei welcher das Holz mittels einer Fördervorrichtung einer Sägeeinrichtung, insbesondere Klappsäge im oberen Bereich eines Maschinentisches zugeführt wird. Im unteren Bereich der bekannten Vorrichtung ist eine Spaltvorrichtung zur Spaltung des zuvor gesägten Holzes vorgesehen.

Die bekannte Vorrichtung hat den Nachteil, dass eine exakte Anpassung der Maschine an das zu sägende Gut nicht erfolgt, so dass eine optimale Arbeitsweise nicht gewährleistet ist.

Der Erfindung liegt die Aufgabe zugrunde, eine Vorrichtung zu schaffen, bei der die Bearbeitung von Holzstämmen, insbesondere das Sägen bzw. das Sägen und das Spalten des Holzes weitgehend automatisch und auf die Holzgrösse abgestimmt erfolgt und bei der das Holz gleich in den gewünschten Endzustand gebracht wird.

Diese Aufgabe wird erfindungsgemäss dadurch gelöst, dass im Bereich der Klappsäge wenigstens ein Tastorgan vorgesehen ist, zur Erfassung der Dicke des zu sägenden Holzes, und dass mittels einer Steuerung der Vorschub der Klappsäge in Abhängigkeit der Dicke des Holzes einstellbar ist.

Die erfindungsgemässe Vorrichtung hat den Vorteil, dass eine weitgehend automatische Bearbeitung von Holzstämmen mit unterschiedlicher Länge durchgeführt werden kann. Dabei wird das Holz im oberen Bereich des Maschinentisches auf eine gewünschte Länge abgesägt, gelangt dann in den unteren Bereich des Maschinentisches, wo es mittels einer integrierten Spaltvorrichtung zu Kleinholz zerhackt wird. Im Zusammenhang mit der Ausbildung der Erfindung gemäss den Unteransprüchen ist mit der erfindungsgemässen Vorrichtung eine ausserordentlich kostengünstige und schnelle Verarbeitung von grossen Mengen Holz möglich. Dabei kann die Vorrichtung sowohl als Holzsäge in dem Fall verwendet werden, wenn Holzklötze z.B. für Holzpflastersteine benötigt werden, also auch als kombinierte Säge mit Spaltvorrichtung, sofern das Holz in kleine Stücke zerhackt werden soll.

Durch die in den weiteren Ansprüchen aufgeführten Massnahmen ist eine vorteilhafte Weiterbildung und Verbesserung der erfindungsgemässen Einrichtung möglich. Besonders vorteilhaft ist, dass im Bereich der Kreissäge wenigstens ein Tast- und/oder Haltebügel angeordnet ist, der in einer Vertikalebene auf das zu sägende Holz absenkbar ist, dass die Senkbewegung z.B. über ein mechanisches Gestänge oder mittels sonstiger Übertragungsmittel auf ein Stellglied übertragbar ist, zur Steuerung des Vorschubs der Säge. Dabei sieht eine weitere vorteilhafte Ausbildung vor, dass das Stellglied als Drosselventil in einer hydraulischen oder pneumatischen Steuerung ausgebildet ist, wobei das aus dem Absenkzylinder für die Säge ausströmende Medium das Drosselventil passieren muss.

Vorstehende Ausführungen sind im Rahmen der Erkenntnis wichtig, dass die Vorschubgeschwindigkeit z.B. einer Kreissäge abhängig ist von der Dicke des Holzes. Bei einem dicken Baumstamm ist der Vorschub der Kreissäge kleiner zu wählen, da wesentlich mehr Zähne des Sägeblattes und damit ein grösserer Kraftaufwand zur Bearbeitung des Holzes notwendig ist als bei weniger dickem Holz. Hier sieht die Erfindung einen kombinierten Tast- und Haltebügel vor, der sich auf das abzusägende Holz niedersenkt und dabei den Durchlass eines Drosselventils verstellt. Je dicker das Holz ist, um so weniger senkt sich der Tast- und Haltebügel und um so geringer ist die Öffnung im Drosselventil. Das aus dem Absenkzylinder der Säge ausströmende Medium kann dann das Drosselventil nur langsamer durchströmen, wodurch die Vorschubgeschwindigkeit reduziert ist. Anstelle einer mechanischen Beeinflussung des Stellglieds kann auch z.B. eine elektrische Wegerfassung und Übertragung erfolgen.

Vorteilhaft ist weiterhin, dass je ein Tast- und Haltebügel beidseitig des Sägeblatts angeordnet ist, die nicht starr miteinander verbunden sind, dass die schwenkbaren Bügel mittels eines Druckzylinders in ihre obere Endlage und mittels einer Zugfeder nach unten bewegt werden können. Die Anordnung von zwei Tast- und Haltebügeln, die vorteilhafterweise über eine Wippe miteinander verbunden sind, bewirken, dass das abzusägende Holz an zwei verschiedenen Stellen gemessen und gehalten wird. Die Wippe schafft dabei einen linearen Ausgleich dieser Messwerte. Hierdurch können Unebenheiten in der Holzoberfläche wie z.B. vorstehende Äste oder dergleichen berücksichtigt werden. Mit Hilfe einer Zugfeder wird der Tast- und Haltearm gegen das Holz gepresst, wobei dieser zickzackförmig profiliert ist.

Eine Ausführungsform sieht weiterhin vor, dass ein verschiebbarer Endschalter die Länge des abzusägenden Holzes begrenzt. Diese Massnahmen dienen zur Automatisation des Bearbeitungsvorganges. Das Holz wird so lange unter der Säge hindurchgeschoben, bis der Endschalter den Holzvorschub beendet. Der Holzvorschub kann dabei in an sich bekannter Weise mittels einer Kette mit Mitnehmern bei kleineren Stükken oder mittels horizontal schwenkbaren Mitnehmerrollen für lange Hölzer geschehen.

Als vorteilhafte Ausbildung der Erfindung wird weiterhin vorgesehen, dass das abgesägte Holz auf einer in Querrichtung zum Maschinentisch nach unten schwenkbaren Auflage mit wenigstens einer Klappe im oberen Bereich des Maschinentisches angeordnet ist. Dabei ist weiterhin vorgesehen, dass das Holz von einer unter der Klappe befindlichen, parallel zu dieser angeordneten Führungsbahn aufnehmbar ist und dass eine Stempelplatte entlang der Führungsbahn gegen einen Messerkopf verschiebbar angeordnet ist.

Diese Ausbildung ermöglicht ein problemloses Zuführen der abgesägten Holzstücke zur in der Vorrichtung integrierten Spaltvorrichtung. Um in die richtige Lage in der Führungsbahn der Spaltvorrichtung zu gelangen, muss das abgesägte Holz genau in die Führungsbahn überführt werden. Das geschieht durch nach unten schwenkbare Klappen, die im geschlossenen Zustand die Auflage für das abgesägte Holz bilden. Die Auflage muss sich derart öffnen, dass das Holz in seiner Längsachse parallel zur Führungsbahn bleibt, d.h., das Holz darf bezüglich seiner Längsachse keine Kippbewegung durchführen.

Als vorteilhafte Weiterbildung der Erfindung ist anzusehen, dass die Stempelplatte in axialer Richtung parallel zueinander angeordnete Druckbolzen oder Stempel aufweist. Dies ist im Zusammenhang der Ausbildung des Messerkopfes zu sehen, der aus mehreren rechtwinklig zueinander in verschiedenen Ebenen angeordneten Messern besteht. Die Druckbolzen bzw. Stempel müssen dann zwischen die Messer hindurchfahren, um restliches Holz im Bereich des Messerkopfes zu entfernen. Damit sich zwischen den Stempeln kein Holz ansammelt, ist erfindungsgemäss ein axial verschiebbares Räumblech mit Abschiebebolzen vorgesehen.

Eine weitere vorteilhafte Ausbildung der Erfindung sieht vor, dass die rechtwinklig zueinander angeordneten Messer des Messerkopfes Messerreihen bilden, die entlang einer V-förmigen Linie angeordnet sind. Zur Herstellung von Brennholz wird demnach das abgesägte Holzstück in seiner Längsrichtung gegen den Messerkopf gedrückt und hindurchgeschoben. Die in verschiedenen Ebenen angeordneten Messer in vertikaler und horizontaler Richtung spalten dann den Holzklotz in kleine Stücke. In diesem Zusammenhang ist es wesentlich, dass die Messer eine nach aussen gerichtete Schnittkante aufweisen. Diese Massnahme sowie die V-förmige Anordnung der Messer bewirkt, dass die auseinandergespaltenen Holzteile sich nicht verklemmen, da sie immer axial nach aussen hin verschoben werden.

Die Erfindung sieht vor, dass verschiedene Holzlängen abgesägt werden können. Demzufolge ist es vorteilhaft, dass der Messerkopf horizontal im Maschinengestell verschiebbar ist. Je nach Länge des zu spaltenden Holzes muss dann der Druckstempel nur die Hublänge ausführen, die der Länge des zu spaltenden Holzes entspricht. Hierdurch wird ein unnötiger Leerlauf des Spaltzylinders verhindert. Dabei ist es weiterhin vorteilhaft, dass auch der Hub des Spaltzylinders mittels Endschalter erfasst wird. Endschalter sind demnach vorgesehen zur Begrenzung der Länge des abzusägenden Holzes, zur Erfassung der Endlage der Säge und zur Erfassung der Endlage des Spaltzylinders.

Die Ausbildung des Vorschubs des Holzes zur Säge hin gemäss Unteransprüchen 7 und 8 kann dahingehend abgewandelt werden, dass der Vorschub des Holzes in der V-förmigen Transportrinne mittels schwenkbaren, messerförmigen, durch einen Vorschubzylinder vor und zurück bewegbaren Mitnehmern erfolgt, die beidseitig am Holz in Bewegungsrichtung in einem spitzen Winkel eingreifen, und dass der Anpressdruck der Mitnehmer an das Holz durch Eigengewicht oder Federkraft erfolgt. Dieser Vorschub sorgt auf einfache Weise für einen sicheren Transport des Holzes zur Säge hin. Die messerförmigen Mitnehmer schwenken beim Rückhub des Vorschubzylinders leicht nach aussen und gleiten über das Holz. Erst beim erneuten Vorschub verkrallen sich die Mitnehmer durch die winkelförmige Anordnung in das Holz.

Die Erfindung sieht als weitere Variante eine Ausbildung gemäss den Unteransprüchen 19 und 20 vor. Diese Massnahmen sind ebenfalls dem problemlosen Transport des zu bearbeitenden Holzes gewidmet. Hierzu ist u.a. vorgesehen, dass sich das Holz beim Transport von der Sägeeinrichtung zur Spalteinrichtung in seiner Lage nicht mehr verdrehen oder verkanten soll. Demzufolge wird die Spaltvorrichtung nicht unterhalb, sondern neben der Sägeeinrichtung angeordnet und das Holz mittels einer Transporteinrichtung zur Spaltvorrichtung transportiert. Dabei soll das abgesägte Holz auf der Transporteinrichtung in seiner Lage zur Transporteinrichtung nicht mehr verändert werden.

Ein vorteilhaftes und zweckmässiges Ausführungsbeispiel der Erfindung ist in der Zeichnung dargestellt und in der nachfolgenden Beschreibung näher erläutert. Es zeigen

Fig. 1 eine schematische Darstellung der erfindungsgemässen Vorrichtung im Längsschnitt,
Fig. 2 die Abtast- und Halteeinrichtung und die Steuereinrichtung für die Säge,
Fig. 3 eine Seitenansicht des Stempels der Spaltvorrichtung,

Fig. 4 eine Frontansicht des Messerkopfes,

Fig. 5 eine Seitenansicht des Messerkopfes der erfindungsgemässen Spaltvorrichtung,

Fig. 6 eine Draufsicht der Vorschubeinrichtung für das Holz und

Fig. 7 eine Frontansicht der nebeneinander angeordneten Sägeeinrichtung und Spalteinrichtung.

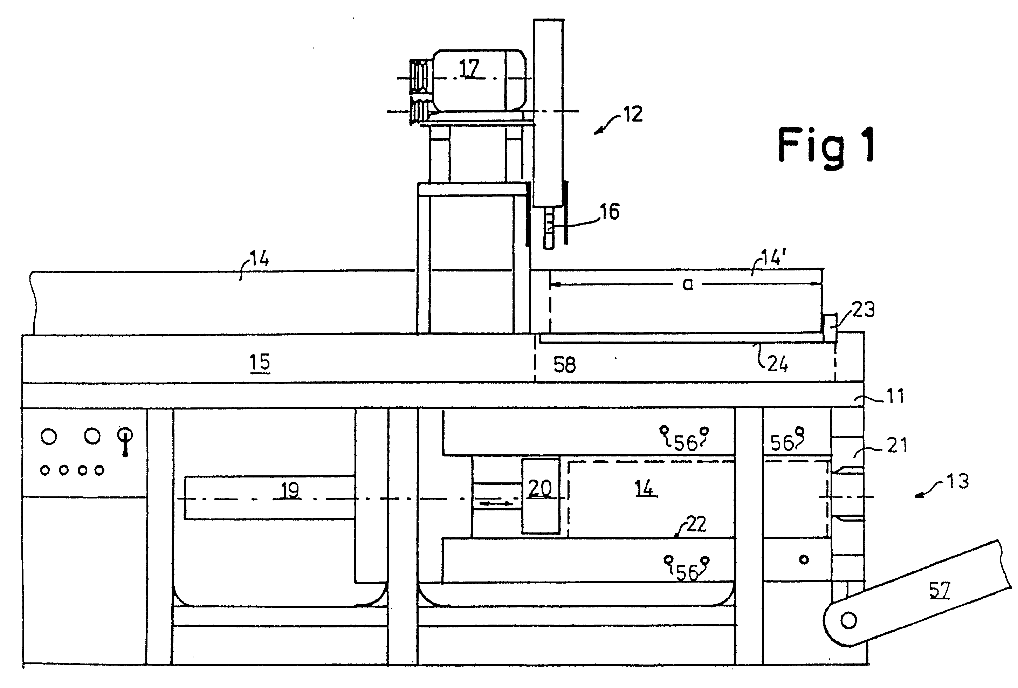

Die in Fig. 1 dargestellte Vorrichtung weist ein Maschinengestell 11 auf, in dessen oberem Bereich eine Einrichtung zum Sägen 12 und in dessen unterem Bereich eine Spaltvorrichtung 13 angeordnet ist.

Zur Aufnahme und zum Transport von Baumstämmen 14 weist der Maschinentisch 11 eine V-förmige Rinne 15 auf. Der Transport des abzusägenden Baumstamms geschieht dabei mittels einer nicht näher dargestellten Transporteinrichtung in Form einer umlaufenden Förderkette mit Mitnehmer bei kleineren Holzstücken oder mittels horizontal schwenkbaren Mitnehmerrollen bei längeren Baumstämmen. Selbstverständlich können auch weitere an sich bekannte Transportmöglichkeiten verwendet werden.

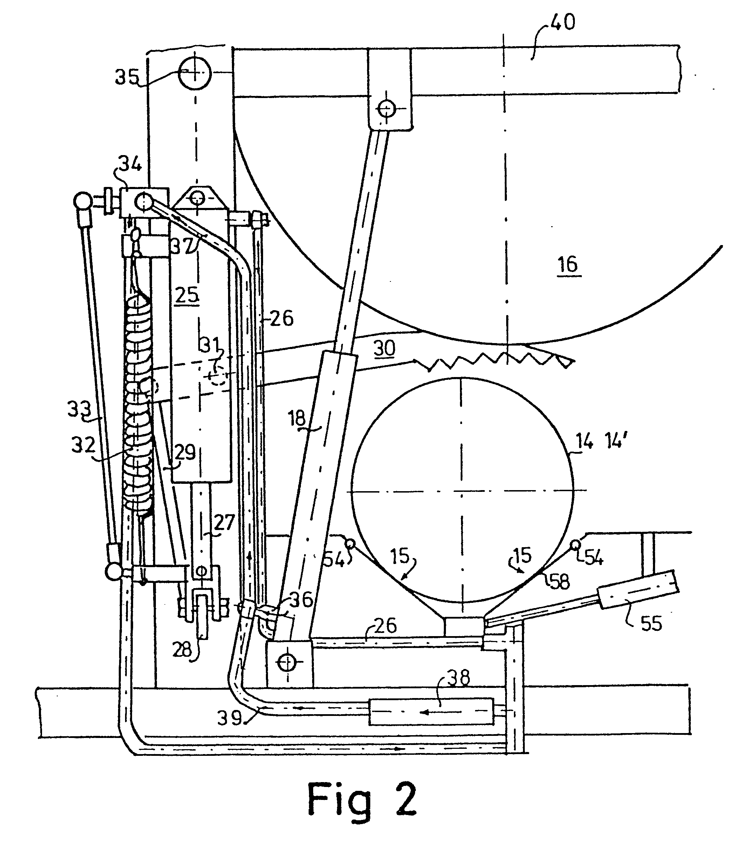

Eine Einrichtung zum Sägen 12 besteht aus einer Klappsäge 16 mit Antriebsmotor 17. Wie in Fig. 2 dargestellt, erfolgt die Schwenkbewegung der Klappsäge 16 durch einen Hydraulikzylinder 18. Durch Druckbeaufschlagung im Hydraulikzylinder wird die Klappsäge ausser Eingriff gebracht.

Im unteren Bereich des Maschinengestells 11 befindet sich die Spaltvorrichtung 13, bestehend aus einem Hydraulikzylinder 19 mit Stempelplatte 20 und Messerkopf 21. Das im oberen Bereich des Maschinengestells 11 abgesägte Holzteil 14' fällt in den unteren Bereich des Maschinengestells 11 in eine Führungsrinne 22 der Spaltvorrichtung.

In Fig. 2 ist die Tast-, Halte- und Steuereinrichtung der Einrichtung zum Sägen 12 dargestellt. Das Holz 14 wird in der Zufuhrrinne 15 der Sägeeinrichtung 12 mit Klappsäge 16 zugeführt. Ein längs einer Schiene 24 verschiebbarer Endschalter 23 schaltet die nicht näher dargestellte Transporteinrichtung ab, sobald die gewünschte Länge a unter der Säge hindurchgeschoben worden ist. Durch den Endschalter 23 wird ein nicht näher dargestelltes Magnetventil geöffnet, so dass das Druckmedium im Druckzylinder 25 über die Druckleitung 26 entweichen kann und der Druckkolben 27 sich nach oben bewegt. Das Ende des Druckkolbens 27 ist mit einer Wippe 28 verbunden, an deren Enden ein Gestänge 29 für den Tast- und Haltebügel 30 befestigt ist. In der Fig. 2 ist nur der hintere Tast- und Haltebügel 30 dargestellt. Ein derartiger Tast- und Haltebügel 30 befindet sich beidseitig vom Sägeblatt der Klappsäge 16. Der Drehpunkt der Tast- und Haltebügel 30 ist mit 31 gekennzeichnet. Eine Zugfeder 32 ist unten mit dem Druckkolben 27 und oben mit dem Druckzylinder 25 verbunden und drückt die Kolbenstange 27 in den Zylinder hinein. Dieser Verstellweg des Druckkolbens 27 wird auf ein weiteres Gestänge 33 übertragen, welches die Öffnung eines Drosselventiles 34 beeinflusst.

Das Absenken der Klappsäge 16 um den Drehpunkt 35 geschieht durch Öffnen des Drosselventils 34. Das im Hydraulikzylinder 18 enthaltene Druckmedium entweicht über den Ausgang 36 und Leitung 37 durch das Drosselventil 34. Das Rückschlagventil 38 mit Zuleitung 39 dient dem Anheben der Klappsäge 16. Je nach Dicke des Holzes 14 wurde die Kolbenstange 27 durch den Tast- und Haltebügel 30 mehr oder weniger stark aus dem Druckzylinder 25 durch die Federkraft der Feder 32 hineingeschoben. Danach richtet sich auch die Verstellung des Drosselventils 34 über das Gestänge 33. Bei einem dickeren Holz 14 ist die Kolbenstange nur wenig verschoben, und die Öffnung des Drosselventils 34 ist nur geringfügig geöffnet. In diesem Fall kann das Druckmedium aus dem Druckzylinder 18 nur langsam über die Leitung 37 und durch das Drosselventil 34 strömen. In diesem Fall bewegt sich die Klappsäge 16 nur langsam durch ihr Eigengewicht nach unten, da der Vorschub beim Sägen von dickem Holz nur sehr langsam sein soll. Die Federkraft der Zugfeder 32 dient gleichzeitig zum Niederdrücken des Tast- und Haltebügels 30 um das Holzteil 14 zu halten. Über die Wippe 28 werden dabei Dickenunterschiede am Holz zwischen den zwei Tast- und Haltebügeln ausgeglichen. Zum Anheben der Sägenwippe 40 sowie der Tast- und Haltebügel 30 wird der Hydraulikzylinder 18 sowie der Druckzylinder 25 über die Leitungen 39, 26 mit Druckmittel beaufschlagt. Der Tast- und Haltebügel 30, der vor der Säge auf das Holz auftritt, regelt somit die Senkgeschwindigkeit der Säge 16, d.h. bei grossem Holzdurchmesser senkt sich die Säge langsam, bei kleinem Holzdurchmeser schneller.

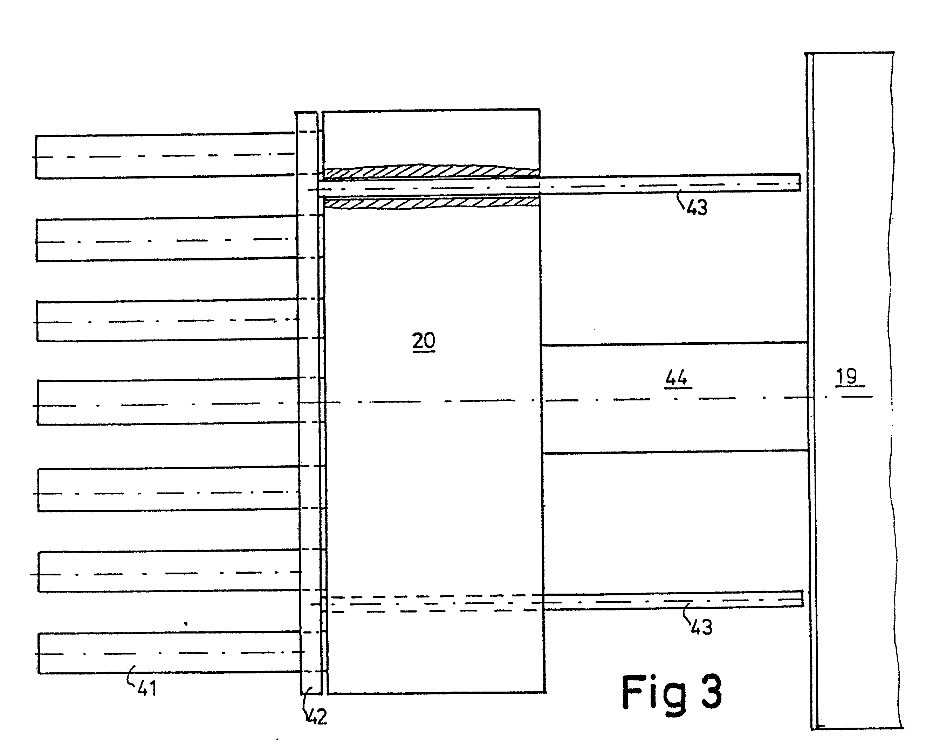

Die in Fig. 3 dargestellte Stempelplatte oder der Druckstempel 20 weist in seinem vorderen Bereich eine Vielzahl von Stempeln bzw. Druckbolzen 41 auf. Diese Stempel 41 sind so angeordnet, dass sie zwischen die Messer des Messerkopfes 21 hindurchreichen und Holz im Messerkopf somit entfernen können. Über die Stempel 41 ist ein Räumblech 42 axial verschiebbar angeordnet. Das Räumblech ist mit Abschiebebolzen 43 verbunden, die durch die Stempelplatte 20 hindurchragen. Beim Rückwärtsziehen der Kolbenstange 44 stossen die Abschiebebolzen 43 am Hydraulikzylinder 19 der Spaltvorrichtung an und schieben das Räumblech 42 über die Stempel 41 in axialer Richtung hinweg. Hierdurch werden Holzreste, die sich zwischen den Stempeln 41 festgesetzt haben, aus diesen herausgestossen.

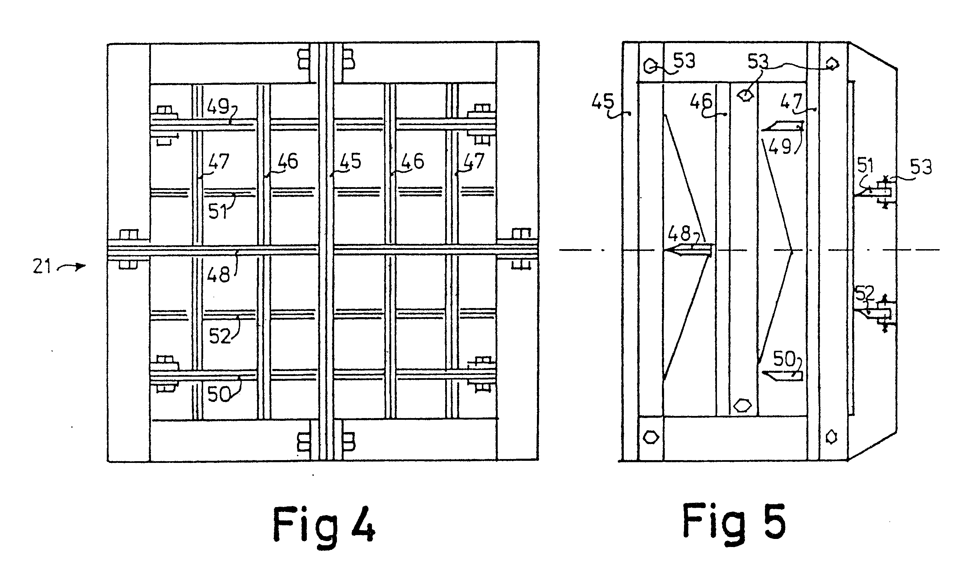

Der in Fig. 4 und 5 dargestellte Messerkopf 21 besteht aus einer Anzahl von senkrecht zueinander angeordneten Messern. In der Frontansicht gemäss Fig. 4 und der Seitenansicht gemäss Fig. 5 ist das vorderste senkrechte Messer mit 45 bezeichnet. In zwei dahinter angeordneten Ebenen befinden sich je zwei weitere vertikal angeordnete Messer 46, 47, deren von oben gesehene Anordnung V-förmig ausgebildet ist. Hinter dem vordersten vertikalen Messer 45 befindet sich ein horizontales Messer 48 in der Mitte des Messerkopfes 21. Ebenfalls V-förmig nach hinten auseinandergehend, befinden sich zwischen den senkrechten Messern 46 und 47 zwei weitere horizontal angeordnete Messer 49, 50. Die in der dritten horizontalen Ebene angeordneten weiteren Messer 51, 52 sind im Ausführungsbeispiel wieder nach innen versetzt angeordnet. Bezüglich dem vordersten horizontalen Messer 48 sind diese jedoch ebenfalls V-förmig angeordnet. Hierdurch findet eine optimale Zerkleinerung des Holzes statt. Die Messer 45 bis 52 sind mittels Schraubverbindungen 53 auswechselbar angeordnet. Abgesehen von den vordersten beiden Messern 45 und 48 müssen die Messerschneiden der übrigen Messer derart geschliffen sein, dass das Holz nach aussen hinweggedrückt wird. Durch die V-förmige Anordnung der Messer sowie durch die nach aussen gerichteten Messerschneiden wird verhindert, dass das ausgespaltene Holz sich im Messerkopf 21 verklemmt. Das gespaltene Holz verlässt den Messerkopf 21 entweder durch Nachrücken des folgenden Holzes oder durch die Stempel 41 der Stempelplatte 20.

Die in Fig. 1 dargestellte Rinne 15 ist auch im hinteren Bereich des Maschinengestells 11 V-förmig ausgebildet zur Aufnahme des abgesägten Holzstückes 14'. Wie in Fig. 2 schematisch dargestellt, kann die Auflage 15 in diesem hinteren Bereich nach unten hin weggeklappt werden. Hierzu dienen ein Gelenk 54 und ein Stellzylinder 55, um die Klappe quer zum Maschinengestell nach unten hin wegklappen zu lassen. Hierbei ist es wichtig, dass das abgesägte Holzteil 14' bezüglich seiner Längsachse keine Kippbewegung ausführt und damit unverkantet auf die Führungsrinne 22 herabfällt, wobei die Führungsrinne 22 ebenfalls V-förmig ausgebildet ist.

Wie in Fig. 1 dargestellt, weist das Maschinengestell im Bereich der Spaltvorrichtung verschiedene Verstellöffnungen 56 auf, zur Verstellung des Messerkopfes 21 in axialer Richtung, je nach Länge des zu spaltenden Holzes 14'. Am Ende des Maschinengestells 11 befindet sich eine Fördervorrichtung 57 zum Abtransport des gespaltenen Holzes.

Die Funktionsweise der Vorrichtung wird im folgenden nochmals kurz skizziert: Ein Holzstamm 14 von ein bis zwei Meter Länge wird auf die Auflage 15 aufgelegt und mittels einer Kette mit Mitnehmer unter die Sägeeinrichtung bis zum Anschlag 23 durchgeschoben, wonach die nicht näher dargestellte Transporteinrichtung abschaltet. Nach der bereits beschriebenen Messung der Dicke des Holzes senkt sich die Klappsäge 16 nach unten und sägt das Holzstück 14' ab. Die Länge des Holzstückes 14' wird durch die Stellung des Anschlags 23 bestimmt. In der untersten Stellung der Klappsäge 16 betätigt dies einen nicht näher dargestellten Endschalter, wodurch sich die Klappe 58 im hinteren Bereich der Rinne 15 nach unten hin öffnet und das Holzstück 14' auf die Führungsrinne 22 der Spaltvorrichtung 13 fällt. Danach wird das Holz 14' mit z.B. zehn Tonnen Druck durch den hydraulischen Zylinder 19 mit der Stempelplatte 20 durch den Messerkopf 21 hindurchgedrückt, wobei das zerkleinerte Holz (Brennholz) auf die Fördereinrichtung 77 fällt.

Bei längeren Holzstücken werden diese z.B. mittels horizontal schwenkenden Antriebsrollen auf der Rinne 15 bewegt.

Die Steuervorrichtung für die Säge kann selbstverständlich auch ohne die Spaltvorrichtung verwendet werden.

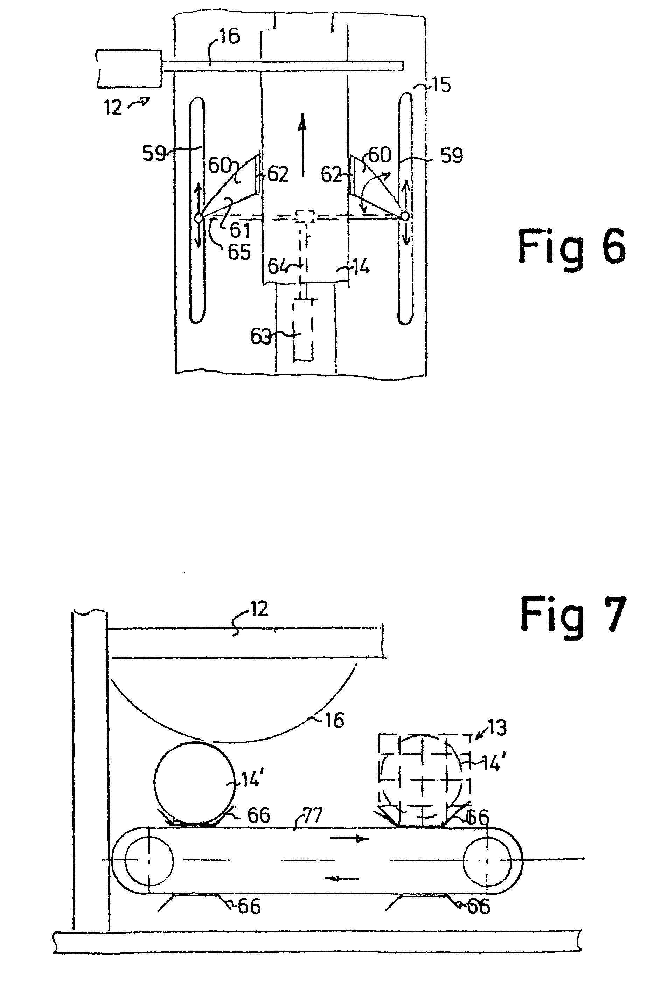

In Fig. 6 ist ein Ausführungsbeispiel für einen Vorschub des Holzes 14 dargestellt. Hierzu weist die V-förmige Rinne 15 längliche, achsparallele Aussparungen 59 auf, durch die der Antrieb der messerförmigen Mitnehmer 60 erfolgt. Diese Mitnehmer 60 sind als dreieckförmige Flächen ausgebildet, deren unterer Rand 61 auf der V-förmigen Rinne 15 aufliegt. Das Eigengewicht der Mitnehmer 60 drückt diesen mit seiner messerförmigen Schneide 62 gegen das Holz 14. Der Transport der Mitnehmer erfolgt über einen hydraulischen Vorschubzylinder 63 mit zugehöriger Kolbenstange 64. Die Verbindung zu den Mitnehmern 60 erfolgt über ein schematisch dargestelltes Gestänge 65.

In Fig. 7 ist eine Ausführungsvariante dargestellt, bei welcher das abgesägte Holz 14' nicht nach unten zur Spaltvorrichtung, sondern horizontal zu dieser transportiert wird. Dies hat den Vorteil, dass ein Verkanten des Holzes bei der Zuführung zur Spalteinrichtung ausgeschlossen wird. Das durch die Säge 12 abgesägte Holz 14' liegt in einer Transportrinne 66. Nach erfolgtem Sägetakt wird diese Rinne mittels einer Transporteinrichtung 77 in horizontaler Richtung zur Spaltvorrichtung 13 transportiert. Die Spaltvorrichtung 13 ist dabei prinzipiell genau gleich wie in Fig. 1 aufgebaut. Die Transporteinrichtung 77 ist derart aufgebaut, dass jeweils eine Rinne an der Sägeeinrichtung und eine an der Spaltvorrichtung angeordnet ist, während zwei weitere Rinnen zum Weitertransport dienen. Statt der V-förmigen Rinnen 66 können selbstverständlich auch andere Halteeinrichtungen wie Halteklötze oder dergleichen Verwendung finden. Ebenso ist statt eines umlaufenden Endlosbandes die Verwendung eines Schiebetisches möglich. Der Gedanke liegt darin, ein Verkanten des Holzes beim Zuführen zur Spaltvorrichtung zu vermeiden.

## Patentansprüche

1. Vorrichtung zur automatischen Bearbeitung von Holzstämmen (14), wobei das Holz mittels einer Fördervorrichtung einer Sägeeinrichtung (12), insbesondere Klappsäge im oberen Bereich eines Maschinentisches und das gesägte Holz einer integrierbaren Spaltvorrichtung (13) zuführbar ist und wobei im unteren Bereich der Vorrichtung bzw. des Maschinentisches (11) ein hydraulischer oder pneumatischer Spaltzylinder (19) mit Stempelplatte (20) und ein der Stempelplatte gegenüberliegender Messerkopf (21) zur Spaltung des Holzes angeordnet ist, dadurch gekennzeichnet, dass im Bereich der Klappsäge (16) wenigstens ein Tastorgan (30) vorgesehen ist zur Erfassung der Dicke des zu sägenden Holzes (14) und dass mittels einer Steuerung der Vorschub der Klappsäge in Abhängigkeit der Dicke des Holzes einstellbar ist.

2. Vorrichtung zur automatischen Bearbeitung von Holzstämmen nach Anspruch 1, dadurch gekennzeichnet, dass im Bereich der Klappsäge (16) wenigstens ein Tast- und/oder Haltebügel (30) angeordnet ist, der in einer Vertikalebene auf das zu sägende Holz (14) absenkbar ist, dass die Senkbewegung über ein mechanisches Gestänge (33) oder mittels sonstiger Übertragungsmittel auf ein Stellglied (34) übertragbar ist zur Steuerung des Vorschubs der Säge (16).

3. Vorrichtung nach Anspruch 2, dadurch gekennzeichnet, dass das Stellglied als Drosselventil (34) in einer hydraulischen oder pneumatischen Steuerung ausgebildet ist, wobei das aus dem Hubzylinder (18) für die Säge (16) ausströmende Medium das Drosselventil (34) passieren muss.

4. Vorrichtung nach Anspruch 2 oder 3, dadurch gekennzeichnet, dass je ein Tast- und Haltebügel (30) beidseitig des Sägeblattes der Klappsäge angeordnet sind, wobei diese nicht starr miteinander verbunden sind, dass die schwenkbaren Bügel (30) mittels eines Druckzylinders (25) in ihre obere Endlage und mittels einer Zugfeder (32) nach unten bewegt werden können.

5. Vorrichtung nach Anspruch 4, dadurch gekennzeichnet, dass die Tast- und Haltebügel (30) über eine Wippe (28) miteinander verbunden sind.

6. Vorrichtung nach Anspruch 1, dadurch gekennzeichnet, dass ein verschiebbarer Endschalter (33) die Länge des abzusägenden Holzes (14') begrenzt.

7. Vorrichtung nach einem oder mehreren der Ansprüche 1 bis 6, dadurch gekennzeichnet, dass der Vorschub des Holzes (14) mittels einer Kette mit Mitnehmer erfolgt.

8. Vorrichtung nach einem oder mehreren der Ansprüche 1 bis 6, dadurch gekennzeichnet, dass der Vorschub des Holzes (14) mittels horizontal schwenkbaren Mitnehmerrollen erfolgt.

9. Vorrichtung nach einem oder mehreren der Ansprüche 1 bis 8, dadurch gekennzeichnet, dass das abgesägte Holz (14') auf einer in Querrichtung zum Maschinentisch (11) nach unten hin schwenkenden Auflage (15) mit wenigstens einer Klappe (58) im oberen Bereich des Maschinentisches angeordnet ist.

## Claims

1. Apparatus for the automatic processing of tree-trunks (14), in which the trunk can be fed by means of a conveyor device to a sawing device (12), especially a folding saw, in the upper region of a machine table and the sawn trunk can be fed to an integrable splitting device (13), and a hydraulic or pneumatic splitting cylinder (19) with a ram plate (20) and a knife head (21) located opposite the ram plate and intended for splitting the trunk are arranged in the lower region of the apparatus or of the machine table (11), characterised in that in the region of the folding saw (16) there is at least one sensing member (30) for detecting the thickness of the trunk (14) to be sawn, and in that the advance of the folding saw can be adjusted by means of a control as a function of the thickness of the trunk.

2. Apparatus for the automatic processing of tree-trunks according to Claim 1, characterised in that arranged in the region of the folding saw (16) is at least one sensing and/or retaining bar (30) which can be lowered in a vertical plane onto the trunk (14) to be sawn, and in that the lowering movement can be transmitted to an actuator (34) via a mechanical linkage (33) or by means of other transmission means, in order to control the advance of the saw (16).

3. Apparatus according to Claim 2, characterised in that the actuator is designed as a throttle valve (34) in a hydraulic or pneumatic control, and the medium flowing out of the lifting cylinder (18) for the saw (16) has to pass through the throttle valve (34).

4. Apparatus according to Claim 2 or 3, characterised in that a sensing and retaining bar (30) is arranged on each of the two sides of the saw blade of the folding saw, these not being connected rigidly to one another, and in that the pivotable bars (30) can be moved into their upper end position by means of a pressure cylinder (25) and downwards by means of a tension spring (32).

5. Apparatus according to Claim 4, characterised in that the sensing and retaining bars (30) are connected to one another via a rocker (28).

6. Apparatus according to Claim 1, characterised in that a displaceable limit switch (33) limits the length of the trunk (14') to be sawn off.

7. Apparatus according to one or more of Claims 1 to 6, characterised in that the advance of the trunk (14) is effected by means of a chain with an engaging means.

8. Apparatus according to one or more of Claims 1 to 6, characterised in that the advance of the trunk (14) is effected by means of horizontally pivotable engaging rollers.

9. Apparatus according to one or more of Claims 1 to 8, characterised in that the sawn-off trunk (14') is arranged in the upper region of the machine table, on a support (15) pivoting downwards in the transverse direction relative to the machine table (11), with at least one flap (58).

## Revendications

1. Dispositif pour le travail automatique de troncs d'arbre (14), dans lequel le bois peut être amené au moyen d'un dispositif de transport à un dispositif de sciage (12), en particulier une scie basculante, dans la zone supérieure d'une table de machine-outil et le bois scié peut être amené à un dispositif de fendage (13) intégrable, et dans lequel, dans la zone inférieure du dispositif ou de la table de machine-outil (11), sont disposés un cylindre de fendage (19) pneumatique ou hydraulique ayant une plaque de poinçon (20) et une tête à lames (21) opposée à la plaque de poinçon pour fendre le bois, caractérisé en ce que, dans la zone de la scie basculante (16), on prévoit au moins un organe palpeur (30) pour déterminer l'épaisseur du bois (14) à scier et en ce que l'avance de la scie basculante peut être réglée selon l'épaisseur du bois au moyen d'une commande.

2. Dispositif pour le travail automatique de troncs d'arbre selon la revendication 1, caractérisé en ce que, dans la zone de la scie basculante (16), est disposé au moins un étrier palpeur et/ou un étrier de retenue (30), qui peut être abaissé, dans un plan vertical, sur le bois (14) à scier, en ce que le mouvement de descente peut être transmis par l'intermédiaire d'une tringlerie mécanique (33) ou par un moyen de transmission autre à un organe de commande (34) pour commander l'avance de la scie (16).

3. Dispositif selon la revendication 2, caractérisé en ce que l'organe de commande est réalisé sous forme d'une soupape d'étranglement (34) dans une commande hydraulique ou pneumatique, le milieu s'écoulant hors du cylindre (18) pour la scie (16) devant passer la soupape d'étranglement (34).

4. Dispositif selon la revendication 2 ou 3, caractérisé en ce que, à la fois, un étrier palpeur et un étrier de retenue (30) sont disposés des deux côtés de la lame de scie de la scie basculante, ceux-ci n'étant pas reliés rigidement l'un à l'autre, en ce que les étriers pivotants (30) peuvent être déplacés au moyen d'un vérin (25) dans leur position d'extrémité supérieure et au moyen d'un ressort de traction (32) vers le bas.

5. Dispositif selon la revendication 4, caractérisé en ce que l'étrier palpeur et l'étrier de retenue (30) sont reliés l'un à l'autre par l'intermédiaire d'une bascule (28).

6. Dispositif selon la revendication 1, caractérisé en ce qu'une fin de course (23) déplaçable limite la largeur du bois (14) à scier.

7. Dispositif selon une ou plusieurs des revendications 1 à 6, caractérisé en ce que l'avance du bois (14) se produit au moyen d'une chaîne avec entraîneur.

8. Dispositif selon une ou plusieurs des revendications 1 à 6, caractérisé en ce que l'avance du bois (14) se produit au moyen de galets d'entraînement pouvant pivoter horizontalement.

9. Dispositif selon une ou plusieurs des revendications 1 à 8, caractérisé en ce que le bois scié (14') est disposé dans la zone supérieure de la table de machine-outil sur un support (15), pivotant vers le bas transversalement à la table de machine-outil (11), avec au moins un volet (58).

Fig 1

0 097 245

Fig 2

Fig 3

Fig 5

Fig 4

Fig 6

Fig 7